# EUROPEAN PATENT SPECIFICATION

(11) **EP 0 867 248 B1**
(45) Date of publication and mention of the grant of the patent: **05.12.2001**
(21) Application number: 98104931.5
(22) Date of filing: 18.03.1998
(51) Int. Cl.: B22F 3/11, H01M 4/80, H01M 4/24

(54) **Method of manufacturing porous metal sheet**
Verfahren zur Herstellung eines porösen Metallblechs
Procédé de préparation d'une feuille poreuse métallique

(30) Priority: 24.03.1997 JP 9026597; 27.02.1998 JP 4824398
(43) Date of publication of application: 30.09.1998
(73) Proprietor: KATAYAMA SPECIAL INDUSTRIES, LTD., Osaka-shi, Osaka-fu (JP)
(72) Inventor: Sugikawa, Hirofumi, Toyonaka-shi, Osaka-fu (JP)
(74) Representative: Wiebusch, Manfred

(56) References cited:
- EP-A- 0 339 717
- EP-A- 0 647 973
- EP-A- 0 657 950
- EP-A- 0 753 896
- EP-A- 0 802 005
- EP-A- 0 864 389
- FR-A- 1 035 359
- GB-A- 1 110 852
- GB-A- 1 375 438
- US-A- 4 820 481

## Description

### BACKGROUND OF THE INVENTION

### 1. Field of the Invention

The present invention relates to a method of manufacturing a metal sheet which is preferably used as an electrode substrate of a battery and the metal sheet manufactured by the manufacturing method. More particularly, the present invention relates to a porous sheet formed of metal powders so that an active substance is filled into pores thereof. The porous sheet is preferably used as the electrode substrate of a nickel hydrogen battery, a nickel cadmium battery, a lithium primary battery, a lithium secondary battery, an alkaline dry cell, a fuel cell; and an electrode plate of various batteries, for example a battery for vehicles.

### 2. Description of the Related Art

As the porous metal sheets which are used as electrode substrates of batteries, the present applicant proposed various kinds of metal sheets formed by making a porous base plate such as a foamed material, a nonwoven sheet, a mesh material or a laminated sheet comprising two or more thereof electrically conductive and then electroplating them.

In manufacturing the porous metal sheets by the method, before electroplating the base plate such as the foamed material, the nonwoven sheet, the mesh material or the laminated sheet thereof, it is necessary to make them electrically conductive by a method selected from evaporating method, chemical plating method or carbon application method, which takes time and labor and costly. It is also necessary to burn the base plate to remove resinous materials after electroplating it and sinter the metal sheet. As a result, burnt-off portions of a resulting metal sheet are vented. An active substance cannot be filled thereinto.

In view of the problems, the present applicant proposed many methods of manufacturing porous metal sheets of metal powders.

In any of the above-described methods, using adhesive agent, fine metal powders are applied to entire surfaces including the inner surface of pores of the porous base plate so as to form an electrically conductive metal layer thereon. Then, the resinous material is removed and the fine metal powders are sintered to form metal sheets.

In the above-described conventional methods of manufacturing the porous metal sheet of fine metal powders, the fine metal powders are applied to the surface of the porous base plate. Thus, the size and shape of the pore of the porous metal sheet is restricted by the size and shape of the pore of the porous base plate. Thus it is difficult to form a pore smaller or greater than the pore of the porous base plate on the porous metal sheet and a pore whose shape is different from that of the pore of the porous base plate.

As one of the conditions required for a metal sheet to serve as the substrate of the electrode plate, it is necessary that the metal sheet is thin to accommodate a large amount of an active substance so as to improve the performance of a battery. But in the above-described conventional methods of manufacturing the porous metal sheet of fine metal powders, the thickness of the porous metal sheet is restricted by the thickness of the porous base plate. Hence it is difficult to manufacture the porous metal sheet having a thickness 1mm or less.

Further, adhesive agent is used in the above-described conventional methods. That is, fine metal powders are applied to the porous base plate by mixing them with the adhesive agent or after the adhesive agent is applied thereto. Thus when the adhesive agent is burnt off, together with the porous base plate in the removal of the resinous material and the sintering of the fine metal powders, large gaps are present between the fine metal powders adjacent to one another because the adhesive agent has been present therebetween. As such, it is difficult to control the shape and size of the pore. In addition, the conventional methods have a disadvantage that the porous metal sheet is formed in a large number of processes because the methods require the use of the adhesive agent.

Further, a solid metal foil is hitherto used as the substrate of the positive and negative electrodes of a lithium secondary battery. In this case, lithium ions are incapable of moving from the front surface of the electrode substrate to the rear surface thereof and vice versa. Therefore, in order to obtain a possible most uniform and thinnest active substance layer, the active substance is required to be applied to each surface of the substrate. In addition, because the surface of the electrode substrate is smooth, the active substance is liable to be separated from the electrode substrate.

In porous metal sheet whose shape is punching shape, lath-shape, mesh-shape, foamed material-shape, nonwoven sheet-shape and so on, lithium ions are capable of moving from the front surface of the electrode substrate to the rear surface thereof and vice versa, the thickness of the active substance can be controlled at both the front and rear surfaces of the electrode substrate by the porous metal sheet. Thus, research and development are being made to use such porous metal sheets as the electrode substrate of the lithium secondary battery. But the size of the solid portion of the porous metal sheet and the size of the pore thereof are not uniform. Therefore, the lithium ions are incapable of moving uniformly and sufficiently. Although it is preferable that the porous metal sheet has a large number of fine pores thereon to allow the lithium ions to move smoothly, the conventional porous metal sheet which satisfies such a demand has not been provided.

The electrode substrate of the lithium secondary battery is required to have a thickness of 10 µm - 30 µm. But as described above, it is difficult for the conventional art to manufacture a conventional metal sheet having a thickness 1mm or less. That is, it is impossile to manufacture a metal sheet whose thickness is as small as a thin foil.

In recent years, portable equipment such as a video camera, a liquid crystal compact television, a CD player, and the like requiring high current have come into wide use. Thus, there is a growing demand for the development of a battery having a great discharge capacity and superior in discharge characteristic in a high load-applied state. In the conventional alkaline dry cell having a separator, pellets made from a positive electrode mixture are filled outside the separator and gel powdered zinc is filled inside the separator. As such, it is very difficult for the alkaline dry cell to have a great discharge capacity and have an improved discharge characteristic in a high load-applied state because the battery can has a limited space.

In order to solve the problem, researches are made on an alkaline dry cell whose negative electrode plate consists of a punching or expanding solid zinc foil or zinc foil and positive electrode plate consists of metal oxide. The negative electrode plate and the positive electrode plate are spirally coiled with a separator interposed to increase the area of the negative electrode plate and the positive electrode plate and the discharge capacity of the battery, and improve the discharge performance thereof in a high load-applied state. But the punching or expanding zinc foil has a problem that the open area ratio thereof is about 50% or less because pores are two-dimensional; pore-forming is carried out and thus a pore-formed portion is cut off and hence left parts of material are much; processing and material costs become high as the thickness of the zinc foil is increasingly thin; and strain and burr are liable to appear in the pore-forming process. Further, the solid zinc foil and the conventional porous metal sheet have problems similar to those of the lithium secondary battery.

Further, conventionally, the electrode of alkali secondary batteries such as the nickel hydrogen battery and the nickel cadmium battery is formed as follows; paste-like slurry of an active substance formed by mixing an active substance such as hydrogen-storing alloy powders or nickel hydroxide powders and electrically conductive agent comprising carbon, a binder and so on is applied to a collector such as punching metal, metal mesh, expanded metal. But the binder prevetns flow of electric current, thus making the electricity-collecting property in the thickness direction of the electrode worse.

EP-A-0 339 717 discloses a method of manufacturing a metal sheet, wherein a metal powder is spread over a supporting sheet, rolled and sintered.

EP-A-0 864 389 which belongs to the prior art pursuant to Article 54 (3) EPC discloses a similar method in which the metal powder that has been spread on the supporting sheet is rolled between two rollers the rolling pressure of which has been so adjusted that small gaps remain between the individual powder particles, so that a porous metal sheet is obtained.

### SUMMARY OF THE INVENTION

The present invention has been developed to solve the problems and to improve a manufacturing method of a metal sheet made from metal powders. Accordingly, it is an object of the present invention to provide a metal sheet-manufacturing method capable of controlling the thickness thereof, the size of pores and the shape thereof as desired and eliminating the use of adhesive agent and of a supporting sheet so as to manufacture the metal sheet in a simple process.

This object is achieved by the method specified in claim 1.

According to the invention, there is provided a method of manufacturing a metal sheet comprising the steps of spreading metal powders on a surface of a pair of rolling rollers rotating continuously; passing the metal powders between the rolling rollers for controlling an area of contact between the metal powders adjacent to each other by rolling the metal powders at a required pressure so as to form a metal sheet; and passing the metal sheet through a sintering oven to sinter the metal sheet.

That is, instead of rolling metal powders spread on the feeding belt or the supporting sheet by means of the rolling roller, the metal powders spread directly on the surface of the rolling roller are rolled at a required pressure by the rotation thereof at their contact portion to form a metal sheet. In this method, because the metal powders are fed out from the rolling roller in the form of a metal sheet, it is possible to move the metal sheet to a sintering oven without placing the metal sheet on the feeding belt or the supporting sheet. But in order to enhance productivity by increasing the pulling speed of the metal sheet, it is preferable to pass the metal sheet fed out from the rolling roller through the sintering oven, with the metal sheet placed on the feeding belt.

The pressing force of a pair of the rolling rollers is set to a small one to leave fine gaps between adjacent metal powders rolled by the rolling rollers and the metal sheet works as a porous sheet by utilizing the fine gaps as pores. That is, by adjusting the strength of the pressure of the rolling roller, it is possible to form a porous sheet having fine pores formed thereon or a solid sheet.

More specific features of the invention are indicated in the dependent claims.

Sublimable fine fragments of a resinous material and the metal powders are spread on the surface of a pair of the rolling rollers; a mixture of the metal powders and the sublimable fine fragmetns are rolled by the rolling rollers to form the mixture into a metal sheet; and the metal sheet is passed through a resinous material-removing/metal powder-sintering oven to burn off the sublimable fine fragmetns and works as a porous sheet having pores which are formed in a portion where the sublimable fine fragments are burnt off.

By mixing the sublimable fine fragments and the metal powders with each other, it is possible to form a porous metal sheet having comparatively large pores according to the size of particles of the sublimable fine fragments and fine pores consisting of gaps formed between metal powders adjacent to each other.

Further, after a porous metal sheet having the fine pores formed thereon is obtained by the rolling rollers, it is fed to the sintering oven, together with the supporting sheet consisting of the porous metal sheet, with the porous metal sheet placed on the supporting sheet. This method allows a one-piece porous metal sheet comprising porous metal sheets of various forms laminated one on the other.

A surface of at least one of the rolling rollers on which the metal powders are spread is stepped at a position between a center and both edges thereof in its axial direction so that the metal powders are collected in a stepped center region thereof and pressed at a required pressure by the rolling rollers.

In a first example, a concave is formed in the center of one roller of a pair of rolling rollers in its axial direction, whereas the surface of the other roller is flat. In this construction, metal powders are collected in the concave of one roller; and metal powders spread on a convex formed at both sides of one roller are removed from the surface of one roller by sucking and the like. The metal powders collected in the concave are rolled by the flat rolling roller at a required pressure. In a second example, a concave is formed in the center of one roller of a pair of rolling rollers in its axial direction, and a convex which is inserted into the concave is formed in the center of the other roller in its axial direction. In this construction, metal powders collected in the concave are rolled by the convex of the other roller.

In a third example, a convex is formed in the center of the surface of one roller of a pair of rolling rollers in its axial direction, and the other roller is flat. In this construction, metal powders spread on-the surface of the convex are rolled by the flat roller. In a fourth example, metal powders spread on the surface of a convex formed in the center of one roller of a pair of rolling rollers in its axial direction are rolled, with the convex fitted in a concave formed in the center of the other roller in its axial direction.

In the above four examples, after a metal sheet is passed through the sintering oven, the metal sheet is passed through a cooling oven subsequently to the sintering oven. The rolling, the sintering, and the cooling may be repeated at a plurality of times. That is, it is possible to use the metal sheet formed by sintering metal powders as an electrode substrate. When the porous metal sheet does not have a desired strength, it is preferable to roll the obtained metal sheet again to increase the area of connection portions of metal powders adjacent to each other and the number of the connection portions thereof. If a great force is applied to the metal powders at a time, the resulting metal sheet may be meandered or cracked. Therefore, it is preferable to roll the metal powders at a low strength of pressure at a plurality of times.

The cooled metal sheet is separated from the feeding belt or the supporting sheet. When the supporting sheet consists of a metal sheet, it is possible to laminate it on a metal sheet manufactured to obtain a one-piece metal sheet, as described previously without separating it from the feeding belt or the supporting sheet.

Metal powders may be spread again on a surface of a metal sheet which is formed by the sintering, rolled, and a resulting metal sheet may be sintered. In this method, the thickness of the metal sheet can be increased to a desired one to enhance the tensile strength thereof.

There is provided a method of manufacturing a metal sheet, wherein pins are pierced into a metal sheet manufactured by a method at above-mentioned to form pores with burrs. According to the method, it is preferable that while the metal sheet is being fed, the metal sheet is passed between a pair of pins-provided rollers to form the pores with burrs.

It is possible that after the metal sheet is formed by the method at above mentioned, the metal sheet is wound as a coil and then, the pores with burrs are formed with the pins while it is being unwound from the coil or the pores with burrs are formed with the pins without winding it as a coil.

It is also possible to move pins-projected press plate toward the metal sheet being fed and away therefrom to form the pores with burrs (namely, burrs are formed around pores formed by pins). The force of holding the active substance can be increased by forming the pores with burrs.

Further, according to the present invention, there is provided a method of manufacturing an electrode for a battery in which an active substance is charged into pores of the sheet obtained by the process described above, and an active substance layer is formed on at least one surface of the substrate of the battery electrode.

As the active substance, the following substances can be used: metals such as zinc, lead, iron, cadmium, aluminum, lithium, and the like; metal hydroxides such as nickel hydroxide, zinc hydroxide, aluminum hydroxide, iron hydroxide, and the like; complex oxides such as lithium dimanganese tetraoxide, lithium cobalt dioxide, lithium nickel dioxide, lithium divanadium tetraoxide and the like; metal oxides such as manganese dioxide, lead dioxide, and the like; electrically conductive polymers such as polyaniline, polyacethylene,and the like; hydrogen-storing alloy; carbon; and other substances. The kind is not limited.

Conventionally, when the active substance is charged into a substrate for a battery electrode, an electrically conductive material such as carbon powders and binder are added to the active substance. But according to the present invention, the active substance is used without adding the binder thereto.

In the case of the negative electrode of a nickel hydrogen battery, powders containing hydrogen-storing alloy as the main component are used as the active substance. In this case, the binder may be or may not be added to the active substance. The active substance containing hydrogen-storing alloy powders as the main component consists of hydrogen-storing alloy powders or a mixture of the hydrogen-storing alloy powders and a transition metal.

The metal sheet of the present invention has a large number of pores. Thus an active substance such as the hydrogen-storing alloy powders can be filled into the pores without binding it with binder and reliably held without dropping it from the metal sheet. The electricity-collecting performance of an electrode can be outstandingly enhanced by not adding the binder to the hydrogen-storing alloy. In particular, when the burr-provided pore is formed by piercing the metal sheet with pins, the hydrogen-storing alloy can be held by the burr on both sides of the metal sheet. Thus, an electrode holding the hydrogen-storing alloy at a high strength can be provided.

A surface of the active substance layer is covered partly or entirely with a transition metal. For example, in the case of the an electrode of hydrogen-storing alloy which is used for a nickel hydrogen battery, the surface of the hydrogen-storing alloy layer is covered with transition metals such as nickel powder and/or copper powder. An active substance layer, for example, powder of a hydrogen-storing alloy layer can be held at a higher strength by coating the surface of the hydrogen-storing alloy layer with the transition metals.

It is preferable that on a metal sheet successively formed by the method at above mentioned, the metal sheet is successively fed downstream or after being wound as a coil the metal sheet is successively fed by uncoiling; then, an active substance is supplied successively to the metal sheet; then, it is pressurized to fill the active substance into pores of the metal sheet; and a layer of the active substance is formed on at least one surface of the metal sheet in a required thickness. That is, an electrode for a battery can be manufactured with high efficiency by supplying powder of the active substance at a required pressure after the process of forming metal powders into the metal sheet which constitutes an electrode substrate.

The electrode substrate can be used, for example, for a nickel hydrogen battery, a nickel cadmium battery, a lithium primary battery, a lithium secondary battery, an alkaline dry cell, a fuel cell, and a battery for vehicles.

### BRIEF DESCRIPTION OF THE DRAWINGS

Fig. 1 is a schematic view showing an apparatus for carrying out the method of a first embodiment of the present invention;
Fig. 2 is a schematic enlarged view showing a state of spread metal powders;
Figs. 3(A) and 3 (B) are schematic sectional views each showing a modification of a rolling roller;
Figs. 4(A) and 4(B) are schematic sectional views each showing another modification of a rolling roller;
Fig. 5 is a schematic view showing an apparatus of a modification of the first embodiment;
Fig. 6 is a schematic sectional view showing a metal sheet which is manufactured by the method of the fourth embodiment;
Fig. 7 is a schematic view showing an apparatus of second embodiment;
Fig. 8 is a schematic view showing an apparatus of a third embodiment of the present invention;
Fig. 9 is an enlarged sectional view of electrode manufactured by a method of the third embodiment;
Fig. 10 is a schematic view showing an apparatus of an fourth embodiment of the present invention;
Fig. 11 is an enlarged sectional view of electrode manufactured by a method of the fourth embodiment; and
Fig. 12 is an enlarged sectional view of electrode manufactured by a modified method of the fourth embodiment.

### DESCRIPTION OF THE PREFERRED EMBODIMENTS

The embodiments of the present invention will be described below in detail with reference to drawings.

### First Embodiment

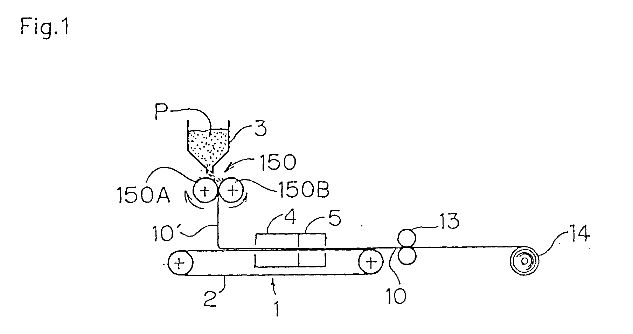

In Fig. 1 showing a first fifth embodiment of the present invention, metal powders P are directly spread on rolling rollers 150 consisting of rollers 150A and 150B from a hopper 3, and rolled at a required strength of pressure in a minimum gap X between the rollers 150A and 150B by the rotation thereof to form fine gaps between adjacent metal powders P. The fine gaps are formed as pores of a resulting porous metal sheet.

The metal powders P have diameters in the range of 0.1 µm - 100 µm and are preferably, spherical, flake-shaped or spike-shaped.

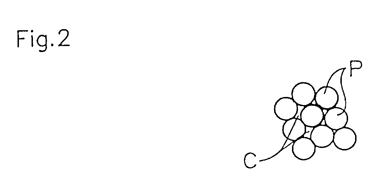

As shown in Fig. 2, entire surfaces of adjacent metal powders are not in contact with each other, but partly in contact with each other. More specifically, they are in a dot contact state or in a line contact state, thus forming a pore C (gap) between the adjacent metal powders P.

In this construction, the metal powders P are integrated with each other and become sheet-shaped by rolling them. At this time, the contact area of the adjacent metal powders P is controlled and the size of the gap between the adjacent metal powders P is adjusted by adjusting the strength of pressure. That is, when the metal powders P are rolled at a high strength of pressure, a resulting metal sheet becomes solid, whereas when the metal powders P are rolled at a low strength of pressure, a resulting metal sheet has comparatively many fine pores. The thickness of the resulting metal sheet is adjusted to a required one by adjusting the strength of pressure.

A circulating driving device 1 is positioned below the rolling rollers 150. The metal sheet 10' fed downward from the rolling rollers 150 is placed on a feeding belt 2 of the circulating driving device 1 to pass it through the sintering oven 4 and the cooling oven 5, together with the feeding belt 2. Then, the metal sheet 10' is separated from the feeding belt 2 and then passed between a pair of skin pass rollers 13. Thereafter, the metal sheet 10' is wound as a coil 14.

As apparent from the above description, the spreading of the metal powders P directly on the surface of the rolling roller 150 allows them to be rolled by the rollers 150A and 150B of the rolling roller 150 and fed from the rolling roller 150 in the form of the metal sheet 10'. Thus, the metal sheet 10' can be fed without a feeding belt or a supporting sheet.

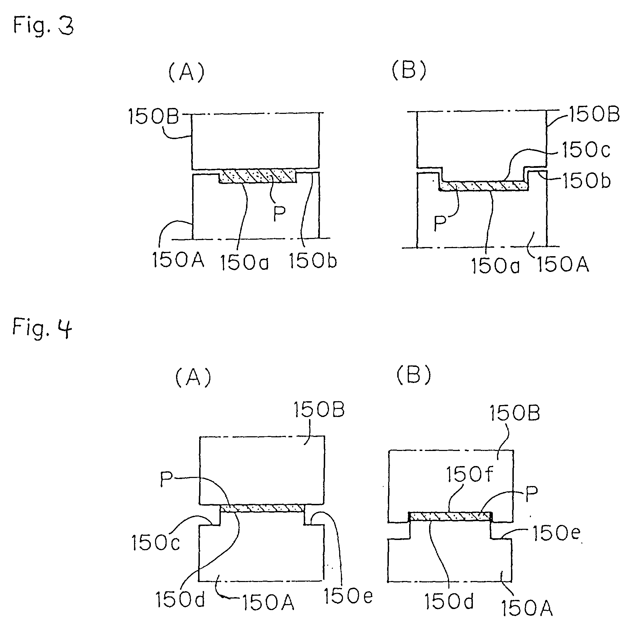

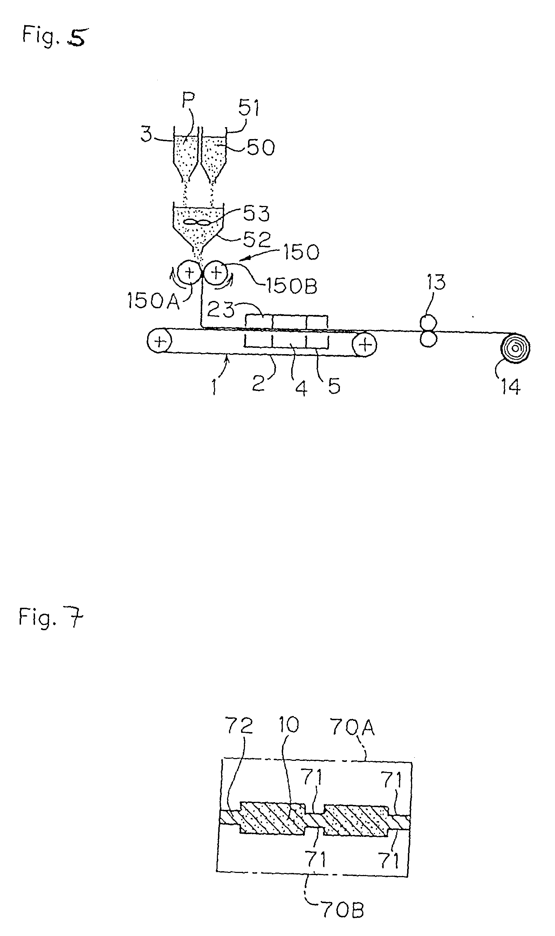

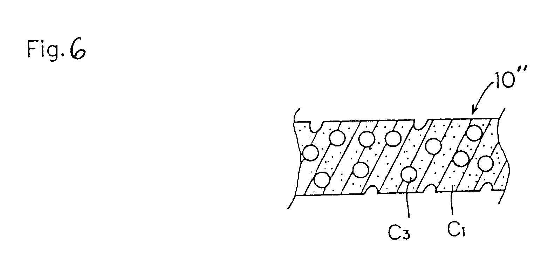

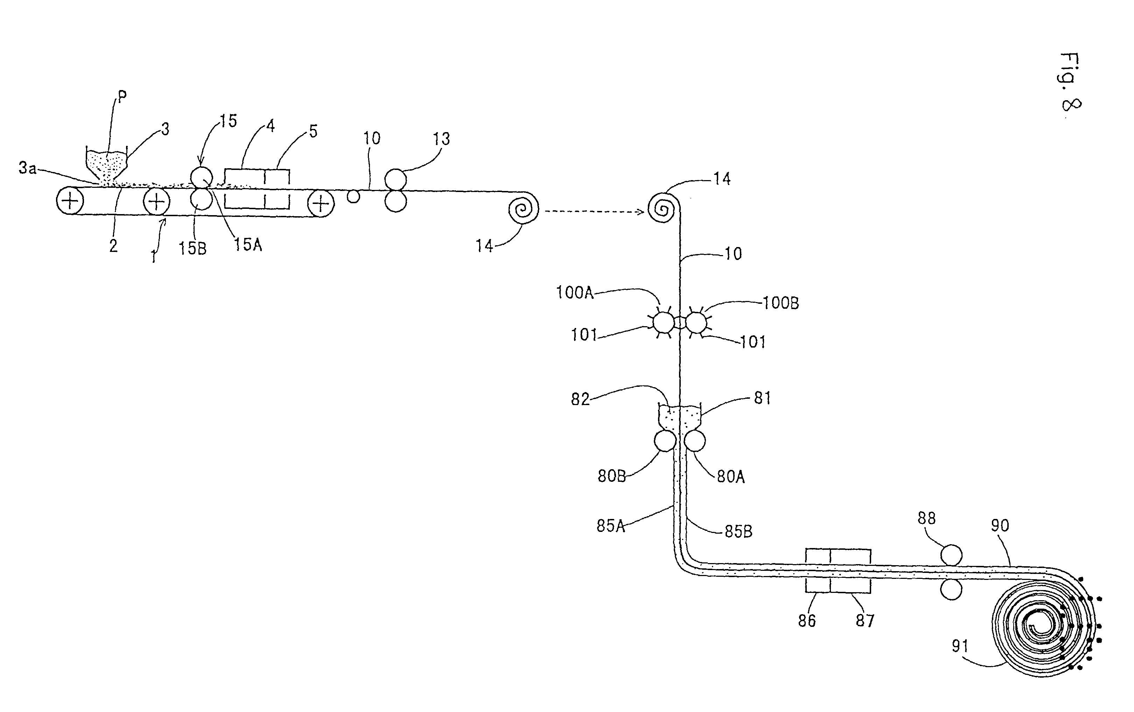

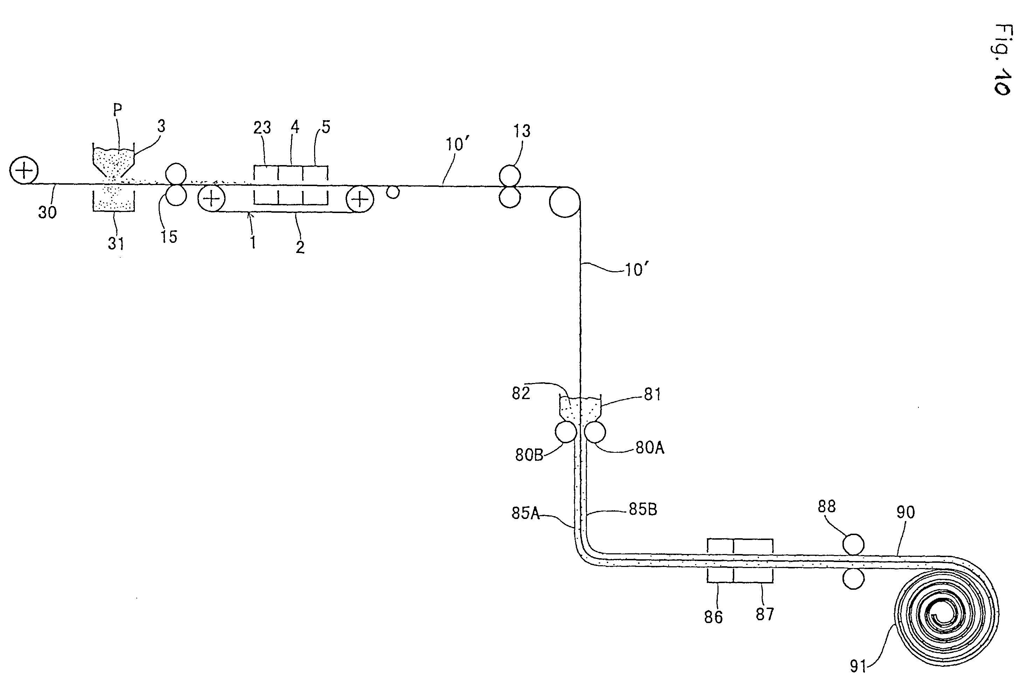

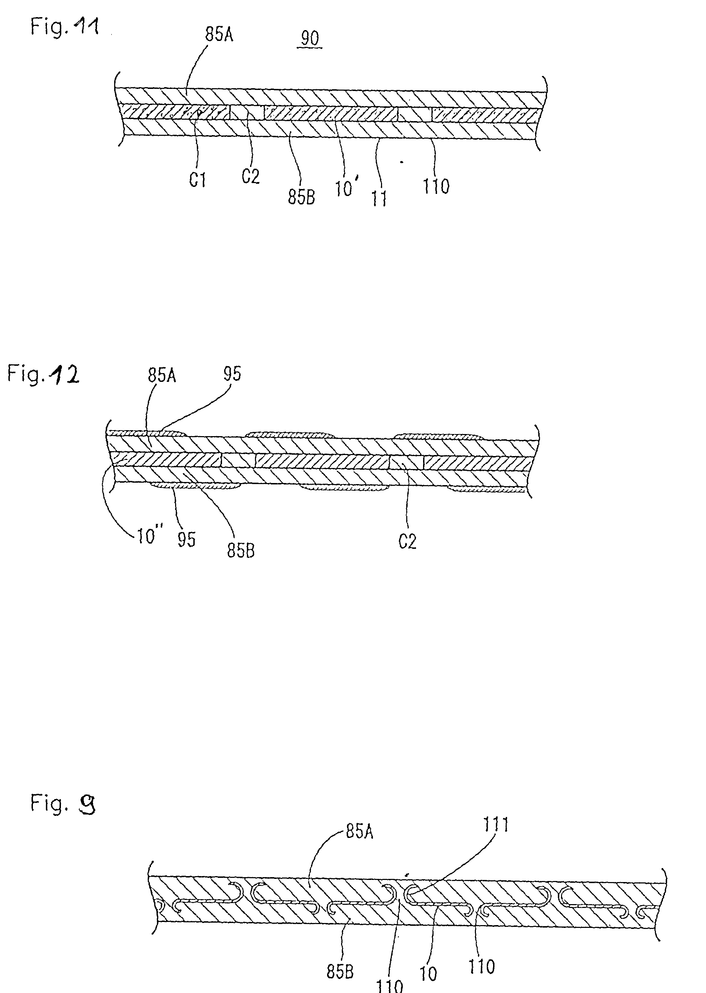

In the first embodiment shown in Fig. 1, the rollers 150A and 150B whose surfaces are flat are used, but a construction described below may be adopted: The surface of the rollers 150A and/or 150B are stepped at a position between the center and both ends thereof in its axial direction so that the metal powders P spread on the roller 150A are collected in a stepped center region and pressed at a required pressure by the rollers 150A and 150B, as shown in Figs. 3 (A), 3 (B), 4 (A), and 4 (B).

More specifically, in the rolling roller 150 shown in Fig. 3 (A), a concave 150a is formed in the center of the roller 150A in its axial direction, whereas the surface of the roller 150B is flat. In this construction, the metal powders P are collected in the concave 150a of the roller 150A; and the metal powders P spread on a convex 150b formed at both sides of the roller 150A are removed from the surface of the roller 150A by sucking. The metal powders P stored in the concave 150a are rolled by the flat roller 150B at a required pressure in the region in which they contact the flat roller 150B. In the construction, a strength of pressure by the rolling rollers 150 can be easily controlled by controlling the depth of the concave 150a and the spread amount of the metal powders P, and further, it is easy to control the width of the metal sheet which can be formed by rolling the metal powders P.

In the rolling rollers 150 shown in Fig. 3 (B), the concave 150a is formed in the center of the rolling roller 150A in its axial direction, and a convex 150c which is inserted into the concave 150a is formed in the center of the rolling roller 150B in its axial direction. In this construction, the metal powders P collected in the concave 150a are rolled by the convex 150c of the rolling roller 150B, with the convex 150c fitted in the concave 150a. Similarly to the construction shown in Fig. 3 (A), the metal powders P can be rolled at a desired strength of pressure by setting the condition of the contact between the concave 150a and the convex 150c as desired, and further, it is easy to control the width of the metal sheet which can be formed by rolling the metal powders P.

In the rolling rollers 150 shown in Fig. 4 (A), a convex 150d is formed in the center of the surface of the rolling roller 150A in its axial direction, and the rolling roller 150B is flat. In this construction, metal powders P spread on the surface of the convex 150d are rolled by the flat roller 150B. In this construction, when the metal powders P are spread on the surface of the rolling roller 150A, the metal powders P on the surface of the convex 150d can be rolled without removing the metal powders P dropped to a step portion 150e positioned below the convex 150d and at both sides thereof by sucking.

In the rolling rollers 150 shown in Fig. 4 (B), metal powders P spread on the surface of a convex 150d formed in the center of the rolling roller 150A in its axial direction are rolled, with a convex 150d fitted in a concave 150f formed in the center of the rolling roller 150B in its axial direction.

### Modification of First Embodiment

In a modification of first embodiment shown in Fig. 5, after a mixture of metal powders P and sublimable fine fragments 50 put into a hopper 52 is agitated by an agitator 53, the mixture is spread on a rolling roller 150 directly from the hopper 52. Then, the rolling roller 150 rolls the mixture, thus forming it into a sheet. The metal sheet fed downward from the rolling roller 150 is fed to a feeding belt 2 of the circulating driving device 1 positioned below the rolling roller 150. Then, the metal sheet is passed through a resinous material-removing oven 23, together with the feeding belt 2 to burn off the sublimable fine fragments 50 to form comparatively large three-dimensional pores. After the metal sheet is passed through a sintering oven 4 and a cooling oven 5, it is separated from the feeding belt 2. Then, the metal sheet is passed between a pair of skin pass rollers 13 and wound as a coil 14.

As the sublimable fine fragments, for example resinous spherical fragments (so-called bead-shape fragments), resinous cubic fragments, resinous rectangular fragments or resinous ultra-fine particles and the like which are burnt off by heating can be used.

As shown in Fig. 6, the portions of a resulting porous metal sheet in which the particles of the sublimable fine fragments 50 have been present are formed as pores C3. That is, a resulting metal sheet 10" has fine pores C1 and the comparatively large pores C3 formed in the portion where the particles of the sublimable fine fragments 50 have been present. The pores C3 consist of not only through-holes, but also pores present randomly in the thickness direction of the metal sheet 10".

The pores C3 having various sizes can be formed by changing the size of the particles of the sublimable fine fragments 50. Further, the pores C3 having various sizes and shapes can be easily formed by mixing the particles of the sublimable fine fragments 50 having different sizes and shapes with the metal powders P.

### Experiment 1

80 parts by weight of copper powders (average diameter: 15 µm - 60 µm) obtained by electrolysis and 20 parts by weight of sublimable fine fragments (particle diameter: 15 µm - 20 µm) were mixed with each other. The mixture was spread on the surface of the rolling roller 150 to roll it at a load of eight tons so as to form the mixture into a copper sheet. The copper sheet was fed to the feeding belt 2 and then heated at 500° C in an atmospheric environment in the resinous material-removing oven 23 to burn off the sublimable fine fragments. Then, the copper sheet was sintered in the sintering oven 4 at 950 ° C for thirty seconds in a non-oxidizing atmosphere. Then, the copper sheet was cooled in the cooling oven 5, and then separated from the feeding belt 2. Then, it was passed between a pair of the skin pass rollers 13 to temper it at a load of eight tons and wound as a coil. The obtained copper sheet was 17 µ m in thickness; 24.1% in open area ratio; 115g/m² in weight per area; and 1.67kgf/20mm in tensile strength.

### Second Embodiment

Fig. 7 shows the second embodiment. In the second embodiment, before a metal sheet 10 manufactured in previous processes is passed between a pair of skin pass rollers 13, it is passed between lead portion-forming rollers 70A and 70B. A convex 71 is formed on the rollers 70A and 70B at both ends and the center thereof in the lengthwise (axial) direction thereof such that the convex 71 of the roller 70A and that of the roller 70B are radially spaced at a predetermined interval and coincident with each other in the lengthwise (axial) direction thereof. Thus, when the metal sheet 10 is passed between the rollers 70A and 70B, fine pores of the metal sheet 10 are crushed by the pressing force of the upper and lower convex 71. As a result, the crushed portion of the metal sheet 10 becomes solid. The solid portion of the metal sheet 10 is used as a lead portion 72. When the metal sheet 10 is used as an electrode substrate of a battery, the lead portion 72 performs an electric current collecting function.

The method of manufacturing the porous metal sheet of the present invention is not limited to the embodiments, but it is possible to use the manufactured metal sheet as a supporting sheet so that metal powders are spread on the supporting sheet and the porous metal sheet is repeatedly used until the porous metal sheet has a desired thickness and strength.

Further, a solid metal sheet, namely, a metal sheet having no pores formed thereon may be formed by rolling the metal powders P at a high strength of pressure.

Figs. 8 and 9 show a third embodiment. In the third embodiment, a metal sheet 10 formed by the method of the first embodiment shown in Fig. 1 is wound as a coil 14; the metal sheet 10 is unwound from the coil 14 and fed successively to pass between pin-provided rollers 100A and 100B; pores with burrs 110 are formed on the metal sheet 10 by pins 101 at both sides thereof; and an active substance , for example containing hydrogen-storing alloy as its main component, is supplied to the metal sheet 10 while it is being fed successively to form an electrode.

That is, as shown in Fig. 8, in a process similar to that of the first embodiment, the metal sheet 10 is tempered by passing between a pair of skin pass rollers 13 to prepare the metal sheet 10 and wound as the coil 14. The metal sheet 10 unwound from the coil 14 is successively fed and guided vertically between the pins-provided rollers 100A and 100B so that the pores with burrs 110 are formed on the metal sheet 10 by the pins 101 at both sides thereof. Then, powders (for example, mixed powders of hydrogen-storing alloy powders and nickel powders) 82 of an active substance stored in a hopper 81 positioned at both sides of the metal sheet 10 and above rollers 80A and 80B are supplied to both surfaces of the metal sheet 10 and between the rollers 80A and 80B.

The mixed powder 82 are filled into the pores with burrs 110 of the metal sheet 10 by the pressing force of the rollers 80A and 80B and held on both surfaces of the metal sheet 10 by burrs 111 to form active substance layers (for example, hydrogen-storing alloy) 85A and 85B having a required thickness.

Then, the metal sheet 10 on which the active substance layers are formed is passed through a sintering oven 86 to sinter it at a non-oxidizing atmosphere. Then it is passed through a cooling oven 87 to cool it. Finally, it is tempered at a required load by passing it between a pair of skin pass rollers 88. An electrode 90(for example, hydrogen-storing alloy) thus formed is wound successively as a coil 91.

### Experiment 2

A nickel sheet 10 formed by rolling metal powders by the skin pass roller 13 had a thickness of 25 *µ* m and a width of 100mm. Pores were formed on the metal sheet 10 with the pins 101 installed on the rollers 100A and 100B at intervals of 0. 2mm to provide burrs having a height of 0. 6mm. The diameter of the pins 101 was 0. 7mm. In the state in which the pores with burrs were formed by piercing the metal sheet 10 with the pins 101, the open area ratio of the metal sheet 10 was 54.8% (plane). The mixed powders 82 which were supplied to the metal sheet 10 were spherical with a powder diameter of 60 µm - 80 µm. The mixed powders 82 were formed by mixing 18 parts by weight of spherical hydrogen-storing alloy powders of AB₅ type with two parts by weight of nickel powders having an average powder diameter of 2.5 µm. The mixed powder 82 was so supplied to both surfaces of the metal sheet 10 that 900g/m² (90g/m) was applied to each surface. Then, a load of five tons was applied to the metal sheet 10 by the rollers 80A and 80B of φ 150mm to roll it at a line speed lm/min. Then, the metal sheet 10 was sintered at 950° C for two minutes in the sintering oven 86 having a non-oxidizing atmosphere. Finally, the metal sheet 10 was tempered at a load of five tons by passing it between a pair of the skin pass rollers 88 to prepare the electrode 90 of the hydrogen-storing alloy having a thickness of 0.3mm.

A binder was not added to the mixed powders of the hydrogen-storing alloy powders and the nickel powders which were supplied to the metal sheet 10. But pores with burrs 110 were formed on the metal sheet at intervals of as small as 0.2mm and the burrs 111 having a height of 0.6mm projected at both sides of pores with burrs. Thus, the mixed powder was firmly held on the metal sheet 10.

As described above, because the binder is not added to the mixed powder, the flow of electric current was not inhibited by the binder. Further, because nickel powders were added to the mixed powder instead of carbon which was conventionally used as an electrically conductive material, the electrode 90 had a high degree of electricity-collecting performance.

Figs. 10 and 11 show a fourth embodiment. In the fourth embodiment, electrodes are successively formed by supplying an active substance prepared by mixing hydrogen-storing alloy powders and nickel powders with each other to a metal sheet 10' which has great pores C2 and fine pores C1 and which is formed by the method of the modification of the first embodiment shown in Fig. 5.

That is, as shown in Fig. 10, tempering is performed by passing metal powders between a pair of skin pass rollers 13 to form the metal sheet 10' and then it is successively fed and guided vertically to a hopper 81 positioned above rollers 80A and 80B positioned at both sides of the metal sheet 10', without winding it as a coil. Mixed powder 82 of hydrogen-storing alloy powders and nickel powders stored in the hopper 81 are supplied to both sides of the metal sheet 10' and between the rollers 80A and 80B. The supplied mixed powders 82 are filled into the pores C1 and C2 by the pressing force of the rollers 80A and 80B and fixedly attached to both surfaces of the metal sheet 10' to form layers 85A and 85B having a required thickness. Then, the metal sheet 10' is passed through a sintering oven 86 to sinter it in non-oxidizing atmosphere and passed through a cooling oven 87 to cool it. Finally, it is passed between a pair of a skin pass roller 88 to temper it at a required load. An electrode 90 (shown in Fig. 9) of the hydrogen-storing alloy thus formed is successively wound as a coil 91.

### Experiment 3

In a nickel metal sheet 10' formed by rolling metal powders by the skin pass roller 13, the diameter of the great pore C2 was 1.8mm; open area ration was 47.0%; and thickness was 25 µm. The mixed powders 82 which were supplied to the metal sheet 10' was prepared by mixing 18 parts by weight of 60 µm - 80 µm of the hydrogen-storing alloy powders of AB2 type with two parts by weight of nickel powders having an average powder diameter of 2.5 µm. The mixed powders 82 were supplied to both surfaces of the metal sheet 10' at 540g/m² on each surface. Then, the metal sheet 10' was pressurized by the rollers 80A and 80B of φ 150mm at a load of five tons to roll it at a line speed of lm/min. Then, the metal sheet 10' was sintered in the sintering oven 86 having non-oxidizing atmosphere at 950° C for two minutes. Finally, the sintered metal sheet 10' was rolled by the skin pass rollers 88 at a load of five tons to form the electrode 90 of the hydrogen-storing alloy having a thickness of 0.18mm.

In the electrode 90 of the hydrogen-storing alloy manufactured as described above, because binder is not added thereto, the flow of electric current is not inhibited. Further, because nickel powders are added thereto instead of carbon which is conventionally used as an electrically conductive material, the electrode 90 has a high degree of electricity-collecting performance.

A method of successively manufacturing electrodes such as an electrode of the hydrogen-storing alloy after manufacturing the metal sheet is not limited to the above-described method. That is, it is possible to successibley manufacture electrodes by uncoiling a metal sheet, similarly to the third embodiment after performing the method of the first, and second embodiment, and then filling an active substance into pores thereof while it is being fed, or similarly to the fourth embodiment, filling the active substance into pores of the metal sheet while it is being fed successively, without coiling the metal sheet. Further, it is possible to mix other transition metals, for example, copper powders with the hydrogen-storing alloy powders, instead of nickel powders. 'In addition, two and more transition metals, for example, nickel powders and copper powders may be mixed with the hydrogen-storing alloy powders. Further, only the hydrogen-storing alloy powders may be used singly. The shape of the transition metal is not limited to the shape of powders.

### Experiment 4

The nickel metal sheet 10" having a thickness of 25 *µ* m and open area ratio of 35% was prepared by the method of the fourth embodiment shown in Fig. 12. Hydrogen-storing alloy powders similar to that of experiment 4 were supplied to both surfaces of the metal sheet 10". Then, it was pressurized at a load of five tons, and then sintered in a sintering oven having non-oxidizing atmosphere at 950° C for two minutes. Finally, the sintered metal sheet was tempered by a skin pass rollers to form an electrode of the hydrogen-storing alloy having a thickness of 0.18mm.

In the electrode of the hydrogen-storing alloy thus prepared, because the metal sheet has pores formed by the sublimable fine fragments and fine pores between metal powders, the pores were filled with the hydrogen-storing alloy powders. Further, a thin layer of the hydrogen-storing alloy powders was reliably fixed to both surfaces of the metal sheet by the sintering the pressure application by means of the skin pass roller.

It is possible that after the hydrogen-storing alloy powders are supplied to the metal sheet to fill the pores and both surfaces thereof with the hydrogen-storing alloy powders as described above, powders of a transition metal such as nickel are supplied to the surface of the hydrogen-storing alloy layers 85A and 85B at both sides of the metal sheet to form a transition metal layer 95 as shown in Fig. 12. The hydrogen-storing alloy powders can be held at a high strength by providing the transition metal layer 95.

The metal which is supplied to the surface of the hydrogen-storing alloy layers 85A and 85B is not limited to nickel powders, but powders of a transition metal such as copper or mixed powders of nickel powders and copper powders may be used. Further, the hydrogen-storing alloy layers may be formed on only one surface of the porous metal sheet.

### Experiment 5

While a porous copper sheet (thickness: 17 µm, open area ratio: 24.1%) obtained in the experiment 2 was being successively transported, a paste active substance obtained by suspending a mixture of 100 parts by weight of mesophase graphite and five parts by weight of styrene butadiene rubber in an aqueous solution of carboxymethylcellulose was applied to both surfaces of the porous copper sheet and was then dried. Then, the porous copper sheet was rolled to form an electrode having a thickness of 0.2mm.

As described in experiment 5, not only an electrode of the hydrogen-storing alloy but also an electrode which is used as the negative pole of a lithium battery can be manufactured by forming a porous metal sheet which is used as an electrode substrate and supplying the active substance thereto while it is being transported successively after it is unwound or without winding it as a coil.

When a pore-formed sheet is used as the supporting sheet, portions corresponding to the pores are formed as through-holes. Thus, a porous metal sheet having fine pores formed between metal powders adjacent to each other and relatively large through-holes can be continuously formed.

Pores can be formed in portions where particles of sublimable fine fragments are burnt off by spreading a mixture of the sublimable fine fragments and metal powders on a feeding belt or a supporting sheet; rolling the mixture by rolling rollers at a required pressure; and removing the sublimable fine fragments. Consequently, it is possible to form three-dimensional pores having a required size and corresponding to the size of particles of the sublimable fine fragments. Accordingly, it is possible to continuously form a metal sheet having fine pores formed between metal powders adjacent to each other and comparatively large through-holes formed by the sublimation of particles of the sublimable fine fragments. Further, a porous metal sheet having pores of various sizes including through-holes can be continuously formed by using the pore-formed sheet.

As described above, it is possible to form fine pores, through-holes, and three-dimensional pores or in combination thereof. Thus, it is possible to provide an electrode substrate comprising a preferable metal sheet corresponding to the kind of a battery. That is, the porous metal sheet of the present invention can be preferably used as an electrode substrate of a nickel hydrogen battery, a nickel cadmium battery, a lithium primary battery, a lithium secondary battery, an alkaline dry cell, a fuel cell; and an electrode plate, for example a battery for vehicles.

Further, the metal powders spread on the surface of the rolling roller or a mixture of the metal powders and the sublimable fine fragments spread thereon can be rolled at a required pressure by the rotation thereof to obtain a metal sheet having required fine pores formed thereon. The sublimable fine fragments can be burnt off in a resinous material-removing oven to form pores in the portion where the sublimable fine fragments have been present. Accordingly, it is easy to manufacture a metal sheet having pores having a desired configuration and size.

Further, a battery electrode such as an electrode of a hydrogen-storing alloy can be successively manufactured by supplying powder of an active substance such as the hydrogen-storing alloy powders to a metal sheet after it is successively formed of metal powders. That is, the present invention can enhance the productivity of an electrode outstandingly because the metal sheet and the electrode formed of the metal sheet composing the substrate thereof can be manufactured successively.

Further, in the battery electrode produced by the method of the present invention, because a binder is not added to the active substance consisting of powders, the amount of the active substance can be increased by that much and electricity-collecting property can be improved. More specifically, the amount of the active substance can be increased by about 7% in correspondence to the amount of the binder which is conventionally added thereto. Furthermore, electricity-collecting property can be enhanced and the performance of the battery can be improved by 5% - 10% by adding transition metal such as nickel powders or copper powders to the active substance, instead of carbon which is conventionally used as an electrically conductive material.

## Claims

1. A method of manufacturing a metal sheet (10') comprising the steps of:
spreading one or more metal powders (P) on a surface of a pair of rolling rollers (150) rotating continuously;
passing the metal powders between the rolling rollers for controlling an area of contact between the metal powder particles adjacent to each other by rolling the metal powders at a required pressure so as to form a metal sheet (10'), wherein the pressing force of the rolling roller is set to a small value to leave fine gaps (C) between adjacent metal powder particles, thereby obtaining a porous sheet with the fine gaps (C) as pores; and
passing the metal sheet through a sintering oven (4) to sinter the metal sheet.

2. The method according to claim 1, wherein sublimable fine fragments of resinous material (50) and the metal powders (P) are spread on the surface of the rolling rollers; a mixture of the metal powders and the resinous material is rolled by the rolling rollers to form the mixture into a metal sheet; and the metal sheet is passed through a resinous material removing/metal powder-sintering oven (23; 4) to burn off the resinous material, thereby forming pores in a portion where the resinous material is burnt off.

3. The method according to any one of claims 1 or 2, wherein a surface of at least one (150A; 150B) of the rolling rollers (150) on which the metal powders are spread is stepped at a position between a center and both edges thereof in its axial direction so that the metal powders are collected in a stepped center region (150a; 150c; 150d; 150f) thereof and pressed at a required pressure by the rolling rollers.

4. The method according to any one of claims 1 through 3, wherein after the metal sheet (10; 10'; 10") is passed through the sintering oven (4), the metal sheet is passed through a cooling oven (5).

5. The method according to claim 4, wherein the rolling, the sintering, and the cooling are repeated a plurality of times.

6. The method according to any one of claims 1 through 5, wherein metal powders are spread again on a surface of the metal sheet which is formed by the sintering, the metal powders are rolled, and then a resulting metal sheet is sintered.

7. A method according to any one of claims 1 through 6, wherein pins (101) are pierced into the sintered metal sheet (10) to form pores (110) with burrs (111).

8. The method according to claim 7, wherein, while the metal sheet is being fed, it is passed between a pair of pin-provided rollers (100A, 100B) to form the pores with burrs.

9. A method of manufacturing an electrode for a battery, comprising the steps of:
manufacturing a sheet (10; 10') in accordance with a method as claimed in any one of claims 1 through 8,
charging an active substance (82) is into a pore of the sheet (10; 10'); and
forming an active substance layer (85A, 85B) on at least one surface of the sheet.

10. A method according to claim 9, wherein a binder is not added to the active substance (82).

11. A method according to claim 9 or 10, wherein the active substance (82) contains hydrogen-storing alloy powders as a main component thereof.

12. A method according to claim 11, wherein the active substance (82) consists of hydrogen-storing alloy powders or a mixture of the hydrogen-storing alloy powders and a transition metal.

13. A method according to any one of claims 9 through 12, wherein a surface of the active substance layer (85A, 85B) is covered partly or entirely with a transition metal.

## Patentansprüche

1. Verfahren zur Herstellung eines Metallbleches (10') mit den Schritten:
Verteilen eines oder mehrerer Metallpulver (P) auf einer Oberfläche eines Paares fortlaufend rotierender Walzen (150),
Hindurchleiten der Metallpulver zwischen den Walzen, zur Einstellung einer Berührungsfläche der aneinandergrenzenden Metallpulverpartikel miteinander durch Walzen der Metallpulver mit einem geforderten Druck, um so ein Metallblech (10') zu bilden, bei dem die Andruckkraft der Walzen auf einen kleinen Wert eingestellt ist, um feine Zwischenräume (C) zwischen den aneinandergrenzenden Metallpulverpartikeln zu lassen und dadurch ein poröses Blech mit den feinen Zwischenräumen (C) als Poren zu erhalten, und
Hindurchleiten des Metallbleches durch einen Sinterofen (4), um das Metallblech zu sintern.

2. Verfahren nach Anspruch 1, bei dem sublimierbare feine Fragmente eines harzartigen Materials (50) und die Metallpulver (P) auf der Oberfläche der Walzen verteilt werden, ein Gemisch aus den Metallpulvern und dem harzartigen Material durch die Walzen gewalzt wird, um aus dem Gemisch ein Metallblech zu bilden, und das Metallblech durch einen Ofen (23; 4) zum Entfernen des harzartigen Materials/Sintern des Metallpulvers geleitet wird, um das harzartige Material auszubrennen und dadurch Poren in einem Bereich zu bilden, aus dem das harzartige Material ausgebrannt wurde.

3. Verfahren nach Anspruch 1 oder 2, bei dem eine Oberfläche wenigstens einer (150A; 150B) der Walzen (150), auf denen die Metallpulver verteilt werden, in einer Position zwischen seiner Mitte und beiden Rändern in Axialrichtung abgestuft ist, so daß die Metallpulver in einem abgestuften Mittelbereich (150a; 150c; 150d; 150f) der Walze gesammelt und durch die Walzen mit einem erforderlichen Druck gepreßt werden.

4. Verfahren nach einem der Ansprüche 1 bis 3, bei dem man das Metallblech (10; 10'; 10"), nachdem es den Sinterofen (4) passiert hat, durch einen Kühlofen (5) laufen läßt.

5. Verfahren nach Anspruch 4, bei dem das Walzen, das Sintern und das Kühlen mehrfach wiederholt werden.

6. Verfahren nach einem der Ansprüche 1 bis 5, bei dem Metallpulver erneut auf einer Oberfläche des durch das Sintern gebildeten Metallbleches verteilt werden, die Metallpulver gewalzt werden und dann ein resultierendes Metallblech gesintert wird.

7. Verfahren nach einem der Ansprüche 1 bis 6, bei dem Stifte (101) in das gesinterte Metallblech (10) gestochen werden, um Poren (110) mit Graten (111) zu bilden.

8. Verfahren nach Anspruch 7, bei dem man das Metallblech, während es transportiert wird, zwischen einem Paar von mit Stiften versehenen Walzen (100A, 100B) hindurchlaufen läßt, um die Poren mit Graten zu bilden.

9. Verfahren zur Herstellung einer Elektrode für eine Batterie, mit den Schritten:
Herstellen eines Bleches (10; 10') nach einem Verfahren gemäß einem der Ansprüche 1 bis 8,
Einbringen einer aktiven Substanz (82) in Poren des Bleches (10; 10') und
Ausbilden einer Schicht (85A, 85B) der aktiven Substanz auf wenigstens einer Oberfläche des Bleches.

10. Verfahren nach Anspruch 9, bei dem der aktiven Substanz (82) kein Bindemittel zugesetzt wird.

11. Verfahren nach Anspruch 9 oder 10, bei dem die aktive Substanz (82) als eine Hauptkomponente Pulver aus einer wasserstoffspeichernden Legierung enthält.

12. Verfahren nach Anspruch 11, bei dem die aktive Substanz (82) aus wasserstoffspeichernden Legierungspulvern oder einem Gemisch aus wasserstoffspeichernden Legierungspulvern und einem Üergangsmetall besteht.

13. Verfahren nach einem der Ansprüche 9 bis 12, bei dem eine Oberfläche der Schicht (85A, 85B) der aktiven Substanz ganz oder teilweise mit einem Übergangsmetall bedeckt wird.

## Revendications

1. Procédé de fabrication d'une feuille métallique (10') comprenant les étapes consistant à :
étaler une ou plusieurs poudres métalliques (P) à la surface d'une paire de rouleaux de laminage (150) tournant en continu ;
faire passer les poudres métalliques entre les rouleaux de laminage pour contrôler une zone de contact entre les particules de poudres métalliques adjacentes les unes avec les autres en laminant la poudre métallique à une pression requise de manière à former une feuille métallique (10'), dans laquelle la force de compression du rouleau de laminage est établie à une valeur faible pour laisser des interstices fins (C) entre les particules de poudre métallique adjacentes, en obtenant ainsi une feuille poreuse avec des interstices fins (C) comme pores ; et
faire passer la feuille métallique via un four de frittage (4) pour fritter la feuille métallique.

2. Procédé selon la revendication 1, **caractérisé en ce qu'**on étale à la surface des rouleaux de laminage des fragments fins sublimables d'une matière résineuse (50) et les poudres métalliques (P); on lamine un mélange des poudres métalliques et de la matière résineuse par les rouleaux de laminage pour former le mélange en une feuille métallique ; et on fait passer la feuille métallique via un four (23 ; 4) d'élimination de matière résineuse/frittage de poudre métallique pour brûler la matière résineuse, en formant ainsi des pores dans la partie où la matière résineuse est brûlée.

3. Procédé selon l'une des revendications 1 ou 2, **caractérisé en ce qu'**une surface d'au moins un (150A ; 150B) des rouleaux de laminage (150) sur lesquels les poudres métalliques sont étalées est réglée en une position entre le centre et les deux bords de celui-ci dans sa direction axiale de manière que les poudres métalliques soient récupérées dans une région centrale (150a ; 150c; 150d ; 150f) réglée de celui-ci et comprimées à une pression requise par les rouleaux de laminage.

4. Procédé selon l'une quelconque des revendications 1 à 3, **caractérisé en ce qu'**après avoir fait passer la feuille métallique (10 ; 10' ; 10") dans le four de frittage (4), on fait passer la feuille métallique dans un four de refroidissement (5).

5. Procédé selon la revendication 4, **caractérisé en ce que** le laminage, le frittage, et le refroidissement sont répétés une pluralité de fois.

6. Procédé selon l'une quelconque des revendications 1 à 5, **caractérisé en ce qu'**on étale de nouveau les poudres métalliques à la surface de la feuille métallique qui est formée par le frittage, on lamine les poudres métalliques, et ensuite on fritte la feuille métallique résultante.

7. Procédé selon l'une quelconque des revendications 1 à 6, **caractérisé en ce que** des épingles (101) ont percé la feuille métallique frittée (10) pour former des pores (110) avec de barbes (111).

8. Procédé selon la revendication 7, **caractérisé en ce que** pendant que la feuille métallique est amenée, elle passe entre une paire de rouleaux (100A, 100B) munis d'épingles pour former les pores avec les barbes.

9. Procédé de fabrication d'une électrode pour une batterie, comprenant les étapes consistant à :
fabriquer une feuille (10 ; 10') selon un procédé tel que revendiqué dans l'une quelconque des revendications 1 à 8 ;
charger une substance active (82) dans un pore de la feuille (10 ; 10') ; et
former une couche de substance active (85A ; 85B) sur au moins une face de la feuille.

10. Procédé selon la revendication 9, **caractérisé en ce qu'**on n'ajoute pas un liant à la substance active (82).

11. Procédé selon l'une quelconque des revendications 9 ou 10, **caractérisé en ce que** la substance active (82) contient des poudres d'alliage de stockage d'hydrogène comme leur composant principal.

12. Procédé selon la revendication 11, **caractérisé en ce que** la substance active (82) est constituée de poudres d'alliage de stockage d'hydrogène ou d'un mélange de poudres d'alliage de stockage d'hydrogène et d'un métal de transition.

13. Procédé selon l'une quelconque des revendications 9 à 12, **caractérisé en ce qu'**on recouvre partiellement ou totalement la surface d'une couche de substance active (85A, 85B) par un métal de transition.
